# EUROPEAN PATENT SPECIFICATION

(11) **EP 4 276 346 B1**
(45) Date of publication and mention of the grant of the patent: **06.08.2025**
(21) Application number: 23172040.0
(22) Date of filing: 08.05.2023
(51) Int. Cl.: F17C 5/00, F17C 5/06

(54) **A GAS DISPENSER WITH A GAS SENSOR**
GASABGABEVORRICHTUNG MIT EINEM GASSENSOR
DISTRIBUTEUR DE GAZ AVEC CAPTEUR DE GAZ

(30) Priority: 13.05.2022 SE 2250577
(43) Date of publication of application: 15.11.2023
(73) Proprietor: DOVER FUELING SOLUTIONS UK LIMITED, Edinburgh EH3 8EH (GB)
(72) Inventor: Larsson, Bengt I., 274 53 Skivarp (SE); Sassner, Linda, 246 36 Löddeköpinge (SE); Petersen, Kenneth, 216 20 Malmö (SE); Helgesson, Hanna, 247 56 Dalby (SE); Gustafsson, Gustaf, 224 73 Lund (SE); Knutsson, Albert, 214 35 Malmö (SE); Bogert, Pontus, 215 62 Malmö (SE); Wingren, Caroline, 211 56 Malmö (SE); Ingesbo Sjöström, Lina, 212 12 Malmö (SE); Edvardsson, Eva-Lie, 294 34 Sölvesborg (SE)
(74) Representative: AWA Sweden AB

(56) References cited:
- WO-A1-2015/175293
- US-A1- 2003 164 202
- US-A1- 2012 192 990
- US-A1- 2014 261 882
- US-A1- 2020 332 961
- US-B2- 7 028 724

## Description

### Technical field

The invention relates to a gas dispenser for dispensing fuel gas to a vehicle and a method for controlling a gas dispenser for dispensing fuel gas to a vehicle.

### Background art

Safety aspects in and around areas containing fuel dispensing units is today a highly debated field and new technology is constantly developed with the intention to increase the safety within such areas. It is well-known that fuel is a highly inflammable substance that must be handled with extreme care. An inherent property of fuel, that increases the risks of its handling, is its high volatility. For the above reasons, safety standards such as the UL standards for safety in North America, the ATEX directive in the EU or the European standard EN 13617 pertaining to petrol filling stations have been created for fuel handling to reduce the thereby induced risks.

According to those standards, electromechanical devices, such as the motor or the above-mentioned switching device, must be enclosed in explosion-proof housings or isolated through the use of intrinsically safe circuitry in order to protect against the hazards of a spark igniting fuel vapors.

Although serious measures have been taken to ensure the safety it is always a concern when highly inflammable substances are handled around fuel dispensing units. It is particularly difficult to ensure safety when the fuel dispensed is gas such as hydrogen, CNG (Compressed Natural Gas) or LPG (Liquefied Natural Gas) that could be dispensed at gaseous state or at liquid state. Indeed, hydrogen can be dispensed at gaseous state or at liquid state, for instance.

One conventional safety measure in fuel gas dispensing units available on the marked to is to arrange gas sensors in different areas of the fuel dispensing unit to be able to detect potential leakage therein.

US 2012/0192990 A1 discloses a fuelling nozzle for dispensing a gaseous fuel to a vehicle includes a main body having a conduit formed therein and configured to permit the gaseous fuel to flow therethrough. The conduit terminates at a dispensing end of the main body. The dispensing end of the main body forms an interface with a fuel inlet of the vehicle during a fuelling operation. The fuelling nozzle further includes a sensor disposed at the dispensing end of the main body adjacent the conduit. The sensor is configured to detect a leakage of the gaseous fuel during the fuelling operation.

US 2020/332961 A1 discloses a gas filling apparatus with excellent filling efficiency through a downsized gas pipe cooling section. A gas filling apparatus of the present invention includes; a main unit having a filling mechanism for transporting a gas from a gas supply source through a primary pipe while measuring a flow rate of the gas and a gas pipe cooling section for cooling a gas pipe in which a gas from the filling mechanism is introduced; and a hose unit having a filling hose connected to a secondary pipe lead from the gas pipe cooling section and a gas filling nozzle attached to an end of the filling hose. The document WO 2015175293 A1 discloses a gas dispenser for dispensing fuel gas to a vehicle.

A problem with the solutions available on the market today is that they are expensive and complicated since a vast number of sensors are required in order to cover the different components and areas of the fuel dispensing unit.

Some areas of the dispenser as the bottom par comprising a dispensing unit is not covered with a sensor located at the nozzle.

### Summary of the invention

It is an objective of the present invention to mitigate, alleviate or eliminate one or more of the above-identified deficiencies in the art and disadvantages singly or in any combination and solve at least the above-mentioned problems.

According to a first aspect of the invention, these and other objects, and/or advantages that will be apparent from the following description of embodiments, are achieved, in full or at least in part, by a gas dispenser for dispensing fuel gas to a vehicle.

The gas dispenser comprises a bottom part adapted to be placed on a ground and comprising a dispensing unit connected to a gas tank and to at least a nozzle intended to supply gas to the vehicle, a top part arranged above the bottom part, and at least one intermediate part connecting the bottom part and the top part. The top part comprises a gas collecting housing having at least one opening, through which fuel gas at a gaseous state can enter.

According to the invention, a gas sensor is arranged at the gas collecting housing, the gas sensor being adapted to detect gas present in the gas collecting housing.

This is advantageous in that only one single sensor will be required for the entire fuel dispensing unit in terms of gas leakage detection. Any gas leakage within, or even around, the fuel dispensing unit will rise up and into the gas collecting housing, at which the gas sensor is arranged. A leakage coming from the bottom part of the dispenser or the nozzle when hold by the nozzle boot can be detected by a single gas sensor.

Thus, a simple and cost-efficient solution to a complicated problem has been achieved.

The at least one intermediate part may comprise a hollow portion, such that gas can travel therethrough.

The at least one intermediate part may be aligned with the at least one opening of the gas collecting housing, such that gas present in the at least one intermediate part can travel therefrom up and into the gas collecting housing via the at least one opening thereof.

The at least one intermediate part may be aligned with at least one opening of the bottom part, such that gas present in the bottom part can travel therefrom, into and through the at least one intermediate part, up and into the gas collecting housing via the at least one opening thereof.

The gas dispenser may further comprise a nozzle boot adapted to hold the nozzle, the nozzle boot being arranged between the bottom part and the top part and in communication with the at least one intermediate part, such that gas leaked from the nozzle placed therein can travel, into and through the at least one intermediate part, up and into the gas collecting housing via the at least one opening thereof.

The gas collecting housing may be gas-tight except for the bottom portion thereof.

The gas sensor may be arranged in the upper portion of the top part inside the gas collecting housing.

This enables to improve the sensibility of the detection as the gas such as hydrogen is light and go up. Gas concentration at the top part is higher than at the bottom part.

The top part may have a perforated area in its bottom portion, through which perforated area gas from the surroundings or gas leaked from the gas dispenser can enter into the gas collecting housing.

Once detected by the gas sensor, the gas can be evacuated outside the dispenser through the perforated area for safety raison.

Another function of the perforated area 16 is to collect leaked gas around the gas dispenser 1.

When there is a gas leak somewhere else in or around the gas dispenser, the leaked gas will rise, and potentially enter the gas collecting housing through the perforated area provided in the bottom portion of the top part.

The gas dispenser may further comprise a control unit connected to the gas sensor and arranged to deactivate the gas dispenser upon detection of gas.

The at least one intermediate part may comprise a column extending between the bottom part and the top part.

The at least one intermediate part may comprise a first and a second column extending between the bottom part and the top part at opposite sides of the gas dispenser.

The at least one opening of the top part may be arranged in a bottom portion thereof.

The at least one opening of the bottom part may be arranged in a top portion thereof.

The gas dispenser may further comprise at least one supply line crossing the hollow portion of the intermediate part from the dispensing unit to the top part, and a connector provided at the top part, wherein the connector is connected to the supply line and linked to the nozzle through a flexible hose.

The gas may be hydrogen and the gas sensor may be a hydrogen sensor.

According to a second aspect of the invention, these and other objects are achieved, in full or at least in part, by a method for controlling a gas dispenser for dispensing fuel gas to a vehicle. The gas dispenser comprises a bottom part adapted to be placed on a ground and comprising a dispensing unit connected to a gas tank and to at least a nozzle intended to supply gas to the vehicle, a top part arranged above the bottom part, the top part comprising a gas collecting housing having at least one opening, through which fuel gas at a gaseous state can enter, at least one intermediate part connecting the bottom part and the top part, a gas sensor arranged at the gas collecting housing, and a control unit connected to the gas sensor. The method comprises the step of deactivating the gas dispenser upon detection of gas in the gas collecting housing by means of the gas sensor.

Effects and features of the second aspect of the present invention are largely analogous to those described above in connection with the first aspect of the inventive concept. Embodiments mentioned in relation to the first aspect of the present invention are largely compatible with the further aspects of the invention. In order to avoid undue repetition, reference is made to the above.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

As used herein, the term "comprising" and variations of that term are not intended to exclude other additives, components, integers or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals may be used for similar elements, and wherein:
Fig. 1 is a perspective view of an exemplary embodiment of gas dispenser according to a first aspect of the invention.
Fig. 2 is a cross-sectional view of the gas dispenser.
Fig. 3a and 3b are perspective views of a top part of the gas dispenser.

### Detailed description of preferred embodiments of the invention

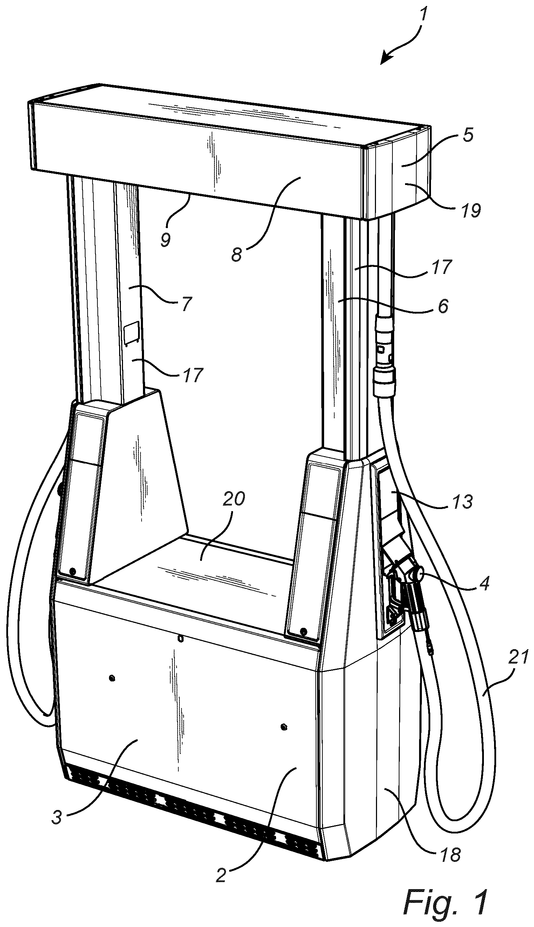

Fig. 1 illustrates an exemplary embodiment of a gas dispenser 1 for dispensing fuel gas to a vehicle. The gas dispenser 1 has a bottom part 2 standing on the ground which comprises a dispensing unit 3 connected to a gas tank (not shown) and to a nozzle 4 intended to supply gas to the vehicle, and a top part 5 arranged above the bottom part 2.

A first and a second column 6, 7 extend from the bottom part 2 to the top part 5 at opposite sides of the gas dispenser 1 and hold the top part 5 in place. The hydraulics of the gas dispenser 1 is arranged in the bottom part 2 and the top part 5 comprises a gas collecting housing 8 which has a plurality of openings in its bottom portion 9, through which fuel gas at a gaseous state can enter.

The gas dispenser may further comprise at least one supply line crossing the column from the dispensing unit to the top part and a connector provided at the top part. The connector is connected to the supply line and linked to the nozzle through a flexible hose 21.

A gas sensor 10 is arranged in the gas collecting housing 8 which is adapted to detect gas present in the gas collecting housing 8.

The first and second column 6, 7 both include a hollow portion 14 and are arranged to be aligned with openings 11, 12 present in the bottom part 2 and top part 5, such that gas present anywhere in the gas dispenser can travel therethrough.

Gases dispensed can be at gaseous or liquid phasis. The gas in question may be a fuel gas meaning hydrogen, LNG, CNG or LPG. Since these gases a lighter than air they will travel upwardly through the parts of the gas dispenser and eventually end up in the gas collecting house.

That is, gas from a potential leak in, for example, the bottom part 2 of the gas dispenser will rise and enter the first column 6 or the second column 7 through the opening 11 in a top portion 20 of the bottom part 2, travel thought the first column 6 or the second column 7 and enter into the gas collecting housing 8 of the top part 5 through the opening 12 in the bottom portion 9 thereof.

A nozzle boot 13 adapted to hold the nozzle 4 is arranged at each column 6, 7 between the bottom part 2 and the top part 5. The nozzle boots 13 are in communication with the columns, respectively, such that gas potentially leaked from the nozzle 4, when held in the nozzle boot 13, can travel from the nozzle boot 13 and into the columns 6, 7. From there, the gas will rise through the columns 6, 7 and enter into the gas collecting housing 8 of the top part 5 through the opening 12 in the bottom portion 9 thereof. At least a hole (not shown) is provided in the nozzle boots 13. The hole is located in front of the output of the nozzle 4 or above the nozzle 4.

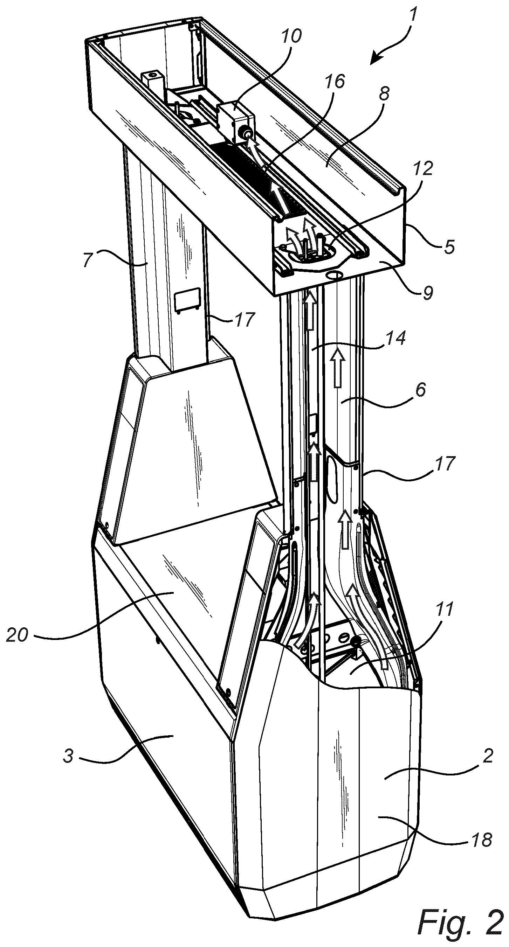

In Fig. 2, a cross-sectional view of the exemplary gas dispenser 1 is illustrated. Here, it is in more detail illustrated how the different part and portions of the gas dispenser is connected and in communication with each other. For example, the hollow portion 14 in the columns 6, 7, respectively, is shown, as well as the opening 11 in the top portion 12 of the bottom part 2 and the opening 12 in the bottom portion 9 of the top part 5.

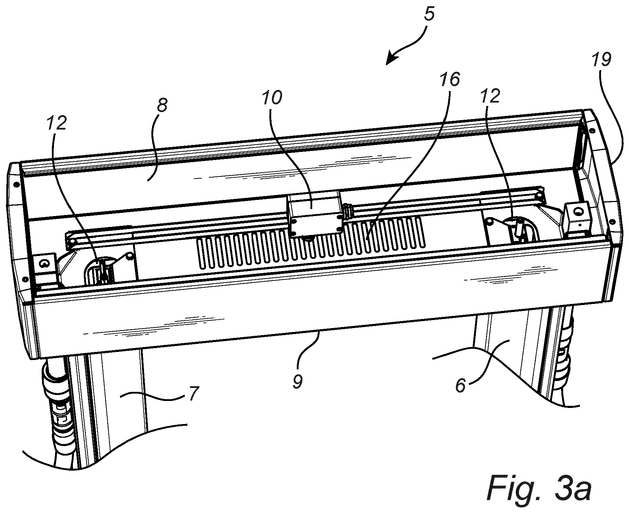

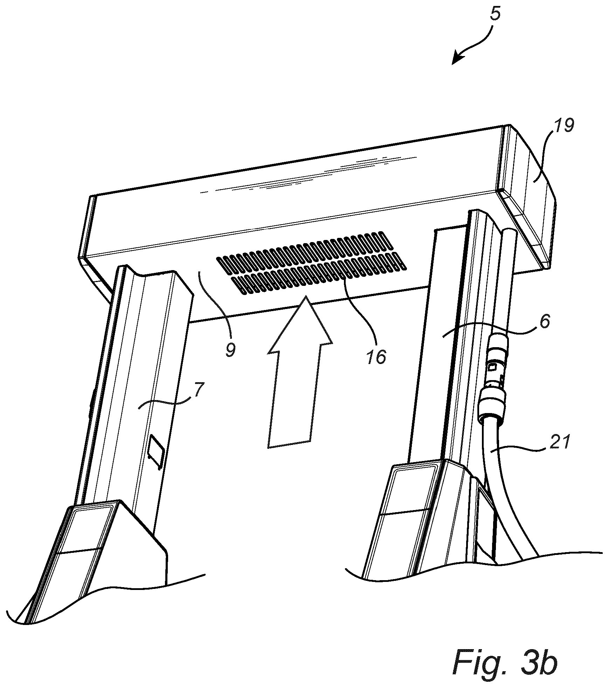

Fig. 3a and Fig. 3b illustrate the top part 5 of the gas dispenser 1 in more detail. The top part 5 of gas dispenser 1 (and the gas collecting housing 8) is preferably gas-tight at all sides except for the bottom portion through which gas must be able to enter.

The gas sensor 10 is arranged in the upper portion of the top part 5 inside the gas collecting housing 8. Other solutions could also be possible but naturally the gas sensor 10 must be able to detect the gas present in the gas collecting housing 8.

In some embodiments, the top part 5 of gas dispenser 1 (and the gas collecting housing 8) has a perforated area 16 in its bottom portion 9, through which gas from the surroundings or gas leaked from the gas dispenser 1 can enter into the gas collecting housing 8. The perforated area 16 comprises several oblong holes that are aligned. Different configurations are possible as circular holes.

Advantageously, the perforated area 16 is located at the middle of the bottom portion 9.

A control unit (not shown) which is arranged in a suitable location in the gas dispenser 1 is connected to the gas sensor 10 and arranged to deactivate the gas dispenser 1 upon detection of gas.

When there is a gas leak in, for example, the hydraulics compartment of the bottom part 2 or at the nozzle 4 present in the nozzle boot 13, the leaked gas will rise, due to the fact that the gas in question is lighter than air and be forced to enter into one or both of the columns 6, 7 through the openings provided. From there, the gas will be lead through the hollow portion 14 of the column(s) 6, 7 and eventually enter into the gas collecting housing 8 of the top part 5 via the opening 12 in the bottom portion 9 of the top part 5. The control unit arranged in the gas dispenser 1 will then deactivate the gas dispenser 1 when the gas present in the gas collecting housing 8, detected by the gas sensor 10, exceeds a predetermined threshold value.

When there is a gas leak somewhere else in or around the gas dispenser 1, the leaked gas will rise, and potentially enter the gas collecting housing 8 through the perforated area 16 provided in the bottom portion 9 of the top part 5. Here, in the same way, the control unit will deactivate the gas dispenser 1 when the gas present in the gas collecting housing 8, detected by the gas sensor 10, exceeds a predetermined threshold value.

The skilled person realizes that a number of modifications of the embodiments described herein are possible without departing from the scope of the invention, which is defined in the appended claims.

For instance, the gas dispenser 1 may be equipped with one single intermediate part 17 connecting the bottom part 2 with the top part 5. In another example, four intermediate parts 17 are provided. One or all of the intermediate parts 17 may carry nozzle boots 13. The intermediate parts 17 may extend from the top portion 12 or the side portion 18 of the bottom part 2 to the side portion 19 or bottom portion 9 of the top part 5. The intermediate part 17 may be hollow such that gas can travel from the bottom part 2 to the top part 5 therethrough.

However, in one exemplary embodiment of the gas dispenser 1, the bottom portion 9 of the top part 5 is provided with openings or a perforated area 16 through which gas can enter into the gas collecting housing 8. With this solution, the hollow portion 14 of the intermediate part 17 may not be necessary. A combination between the two solutions is naturally also possible.

## Claims

1. A gas dispenser (1) for dispensing fuel gas to a vehicle, comprising:
a bottom part (2) adapted to be placed on a ground and comprising a dispensing unit (3) connected to a gas tank and to at least a nozzle (4) intended to supply gas to the vehicle,
a top part (5) arranged above the bottom part (2), and
at least one intermediate part (17) connecting the bottom part (2) and the top part (5),
**characterised in that** the top part (5) comprises a gas collecting housing (8) having at least one opening (12), through which fuel gas at a gaseous state can enter,
and that a gas sensor (10) is arranged at the gas collecting housing (8), the gas sensor (10) being adapted to detect gas present in the gas collecting housing (8).

2. The gas dispenser (1) according to claim 1, wherein the at least one intermediate part (17) comprises a hollow portion (14), such that gas can travel therethrough.

3. The gas dispenser (1) according to claim 2, wherein the at least one intermediate part (17) is aligned with the at least one opening (12) of the gas collecting housing (8), such that gas present in the at least one intermediate part (17) can travel therefrom up and into the gas collecting housing (8) via the at least one opening (12) thereof.

4. The gas dispenser (1) according to claim 2 or 3, wherein the at least one intermediate part (17) is aligned with at least one opening (11) of the bottom part (2), such that gas present in the bottom part (2) can travel therefrom, into and through the at least one intermediate part (17), up and into the gas collecting housing (8) via the at least one opening (12) thereof.

5. The gas dispenser (1) according to any one of the preceding claims, further comprising a nozzle boot (13) adapted to hold the nozzle (4), the nozzle boot (13) being arranged between the bottom part (2) and the top part (5) and in communication with the at least one intermediate part (17), such that gas leaked from the nozzle (4) placed therein can travel, into and through the at least one intermediate part (17), up and into the gas collecting housing (8) via the at least one opening (12) thereof.

6. The gas dispenser (1) according to any one of the preceding claims, wherein the gas collecting housing (8) is gas-tight except for the bottom portion (9) thereof.

7. The gas dispenser (1) according to any one of the preceding claims, wherein the gas sensor (10) is arranged in an upper portion of the top part (5) inside the gas collecting housing (8).

8. The gas dispenser (1) according to any one of the preceding claims, wherein the top part (2) has a perforated area (16) in its bottom portion (9), through which gas from the surroundings or gas leaked from the gas dispenser (1) can enter into the gas collecting housing (8).

9. The gas dispenser (1) according to any one of the preceding claims, further comprising a control unit connected to the gas sensor (10) and arranged to deactivate the gas dispenser (1) upon detection of gas.

10. The gas dispenser (1) according to any one of the preceding claims, wherein the at least one intermediate part (17) comprises a column (6, 7) extending between the bottom part (2) and the top part (5).

11. The gas dispenser (1) according to any one of the preceding claims, wherein the at least one intermediate part (17) comprises a first and a second column (6, 7) extending between the bottom part (2) and the top part (5) at opposite sides of the gas dispenser (1).

12. The gas dispenser (1) according to claim 3, wherein the at least one opening (12) of the top part (5) is arranged in a bottom portion (9) thereof.

13. The gas dispenser (1) according to claim 4, wherein the at least one opening (11) of the bottom part (3) is arranged in a top portion (20) thereof.

14. The gas dispenser (1) according to any one of the claims 10 to 13, further comprising at least one supply line crossing the hollow portion (14) of the intermediate part (17) from the dispensing unit (3) to the top part (5), and a connector provided at the top part (5), wherein the connector is connected to the supply line and linked to the nozzle (4) through a flexible hose.

15. The gas dispenser (1) according to any one of the preceding claims, wherein the gas is hydrogen and the gas sensor (10) is a hydrogen sensor.

16. A method for controlling a gas dispenser (1) for dispensing fuel gas to a vehicle, the gas dispenser (1) comprising:
a bottom part (2) adapted to be placed on a ground and comprising a dispensing unit (3) connected to a gas tank and to at least a nozzle (4) intended to supply gas to the vehicle,
a top part (5) arranged above the bottom part (2), the top part (5) comprising a gas collecting housing (8) having at least one opening (12), through which fuel gas at a gaseous state can enter,
at least one intermediate part (17) connecting the bottom part (2) and the top part (5),
a gas sensor (10) arranged at the gas collecting housing (8), and
a control unit connected to the gas sensor (10),
wherein the method comprises the step of deactivating the gas dispenser (1) upon detection of gas in the gas collecting housing (8) by means of the gas sensor (10).

## Patentansprüche

1. Gasabgabevorrichtung (1) zum Abgeben von Brenngas an ein Fahrzeug, Folgendes umfassend:
ein Unterteil (2), das dazu eingerichtet ist, auf einem Untergrund platziert zu sein, und eine Abgabeeinheit (3) umfasst, die mit einem Gastank und mindestens einer Zapfpistole (4) verbunden ist, die dazu bestimmt ist, einem Fahrzeug Gas zuzuführen,
ein Oberteil (5), das über dem Unterteil (2) angeordnet ist, und
mindestens ein Zwischenteil (17), welches das Unterteil (2) mit dem Oberteil (5) verbindet,
**dadurch gekennzeichnet, dass** das Oberteil (5) ein Gassammelgehäuse (8) mit mindestens einer Öffnung (12), durch welche Brenngas im gasförmigen Zustand eintreten kann, umfasst,
und dass ein Gassensor (10) am Gassammelgehäuse (8) angeordnet ist, wobei der Gassensor (10) dazu eingerichtet ist, im Gassammelgehäuse (8) vorhandenes Gas zu erfassen.

2. Gasabgabevorrichtung (1) nach Anspruch 1, wobei das mindestens eine Zwischenteil (17) einen hohlen Abschnitt (14) umfasst, sodass Gas dort hindurch verlaufen kann.

3. Gasabgabevorrichtung (1) nach Anspruch 2, wobei das mindestens eine Zwischenteil (17) mit der mindestens einen Öffnung (12) des Gassammelgehäuses (8) ausgerichtet ist, sodass in dem mindestens einen Zwischenteil (17) vorhandenes Gas von dort hinauf und über dessen mindestens eine Öffnung (12) in das Gassammelgehäuse (8) verlaufen kann.

4. Gasabgabevorrichtung (1) nach Anspruch 2 oder 3, wobei das mindestens eine Zwischenteil (17) mit mindestens einer Öffnung (11) des Unterteils (2) ausgerichtet ist, sodass in dem Unterteil (2) vorhandenes Gas von dort in und durch das mindestens eine Zwischenteil (17) hinauf und über dessen mindestens eine Öffnung (12) in das Gassammelgehäuse (8) verlaufen kann.

5. Gasabgabevorrichtung (1) nach einem der vorstehenden Ansprüche, ferner umfassend eine Zapfpistolenaufnahme (13), die dazu eingerichtet ist, die Zapfpistole (4) zu halten, wobei die Zapfpistolenaufnahme (13) zwischen dem Unterteil (2) und dem Oberteil (5) und mit dem mindestens einen Zwischenteil (17) verbunden angeordnet ist, sodass aus der darin platzierten Zapfpistole (4) austretendes Gas in und durch das mindestens eine Zwischenteil (17) hinauf und über dessen mindestens eine Öffnung (12) in das Gassammelgehäuse (8) verlaufen kann.

6. Gasabgabevorrichtung (1) nach einem der vorstehenden Ansprüche, wobei das Gassammelgehäuse (8) mit Ausnahme von dessen unterem Abschnitt (9) gasdicht ist.

7. Gasabgabevorrichtung (1) nach einem der vorstehenden Ansprüche, wobei der Gassensor (10) in einem oberen Abschnitt des Oberteils (5) in dem Gassammelgehäuse (8) angeordnet ist.

8. Gasabgabevorrichtung (1) nach einem der vorstehenden Ansprüche, wobei das Oberteil (2) einen perforierten Bereich (16) im unteren Abschnitt (9) aufweist, durch den Gas aus der Umgebung oder aus der Gasabgabevorrichtung (1) ausgetretenes Gas in das Gassammelgehäuse (8) eintreten kann.

9. Gasabgabevorrichtung (1) nach einem der vorstehenden Ansprüche, ferner umfassend eine Steuereinheit, die mit dem Gassensor (10) verbunden und dazu angeordnet ist, die Gasabgabevorrichtung (1) beim Erfassen von Gas zu deaktivieren.

10. Gasabgabevorrichtung (1) nach einem der vorstehenden Ansprüche, wobei das mindestens eine Zwischenteil (17) eine Säule (6, 7) umfasst, die sich zwischen dem Unterteil (2) und dem Oberteil (5) erstreckt.

11. Gasabgabevorrichtung (1) nach einem der vorstehenden Ansprüche, wobei das mindestens eine Zwischenteil (17) eine erste und eine zweite Säule (6, 7) umfasst, die sich zwischen dem Unterteil (2) und dem Oberteil (5) auf entgegengesetzten Seiten der Gasabgabevorrichtung (1) erstrecken.

12. Gasabgabevorrichtung (1) nach Anspruch 3, wobei die mindestens eine Öffnung (12) des Oberteils (5) in einem unteren Abschnitt (9) davon angeordnet ist.

13. Gasabgabevorrichtung (1) nach Anspruch 4, wobei die mindestens eine Öffnung (11) des Unterteils (3) in einem oberen Abschnitt (20) davon angeordnet ist.

14. Gasabgabevorrichtung (1) nach einem der Ansprüche 10 bis 13, ferner umfassend mindestens eine Zuführleitung, die den hohlen Abschnitt (14) des Zwischenteils (17) von der Abgabeeinheit (3) zum Oberteil (5) durchquert, und einen Verbinder, der am Oberteil (5) vorgesehen ist, wobei der Verbinder mit der Zuführleitung verbunden und durch einen flexiblen Schlauch mit der Zapfpistole (4) gekoppelt ist.

15. Gasabgabevorrichtung (1) nach einem der vorstehenden Ansprüche, wobei das Gas Wasserstoff ist und der Gassensor (10) ein Wasserstoffsensor ist.

16. Verfahren zum Steuern einer Gasabgabevorrichtung (1) zum Abgeben von Brenngas an ein Fahrzeug, wobei die Gasabgabevorrichtung (1) Folgendes umfasst:
ein Unterteil (2), das dazu eingerichtet ist, auf einem Untergrund platziert zu sein, und eine Abgabeeinheit (3) umfasst, die mit einem Gastank und mindestens einer Zapfpistole (4) verbunden ist, die dazu bestimmt ist, einem Fahrzeug Gas zuzuführen,
ein Oberteil (5), das über dem Unterteil (2) angeordnet ist, wobei das Oberteil (5) ein Gassammelgehäuse (8) mit mindestens einer Öffnung (12), durch welche Brenngas im gasförmigen Zustand eintreten kann, umfasst,
mindestens ein Zwischenteil (17), welches das Unterteil (2) mit dem Oberteil (5) verbindet,
einen Gassensor (10), der an dem Gassammelgehäuse (8) angeordnet ist, und
eine Steuereinheit, die mit dem Gassensor (10) verbunden ist,
wobei das Verfahren den Schritt des Deaktivierens der Gasabgabevorrichtung (1) beim Erfassen von Gas im Gassammelgehäuse (8) mittels des Gassensors (10) umfasst.

## Revendications

1. Distributeur de gaz (1) destiné à distribuer du gaz combustible à un véhicule, comprenant :
une partie inférieure (2) conçue pour être posée au sol et comportant une unité de distribution (3) reliée à un réservoir de gaz et à au moins une buse (4) destinée à alimenter le véhicule en gaz,
une partie supérieure (5) disposée au-dessus de la partie inférieure (2), et
au moins une partie intermédiaire (17) reliant la partie inférieure (2) et la partie supérieure (5),
**caractérisé en ce que** la partie supérieure (5) comprend un boîtier collecteur de gaz (8) présentant au moins une ouverture (12) par laquelle du gaz combustible à l'état gazeux peut entrer,
et un capteur de gaz (10) est disposé au niveau du boîtier collecteur de gaz (8), le capteur de gaz (10) étant conçu pour détecter le gaz présent dans le boîtier collecteur de gaz (8).

2. Distributeur de gaz (1) selon la revendication 1, l'au moins une partie intermédiaire (17) comprenant une portion creuse (14), de sorte que le gaz puisse circuler à travers celle-ci.

3. Distributeur de gaz (1) selon la revendication 2, l'au moins une partie intermédiaire (17) étant alignée avec l'au moins une ouverture (12) du boîtier collecteur de gaz (8), de sorte que le gaz présent dans l'au moins une partie intermédiaire (17) puisse s'écouler de là vers le haut et dans le boîtier collecteur de gaz (8) par l'intermédiaire de l'au moins une ouverture (12) de celui-ci.

4. Distributeur de gaz (1) selon la revendication 2 ou 3, l'au moins une partie intermédiaire (17) étant alignée avec au moins une ouverture (11) de la partie inférieure (2), de sorte que le gaz présent dans la partie inférieure (2) puisse circuler à partir de celle-ci, dans et à travers l'au moins une partie intermédiaire (17), vers le haut et dans le boîtier collecteur de gaz (8) par l'intermédiaire de l'au moins une ouverture (12) de celui-ci.

5. Distributeur de gaz (1) selon l'une quelconque des revendications précédentes, comprenant en outre un soufflet de buse (13) conçu pour maintenir la buse (4), le soufflet de buse (13) étant disposé entre la partie inférieure (2) et la partie supérieure (5) et en communication avec l'au moins une partie intermédiaire (17), de sorte que le gaz qui fuit de la buse (4) placée en son sein puisse circuler, dans et à travers ladite au moins une partie intermédiaire (17), et dans le boîtier collecteur de gaz (8) par l'intermédiaire de l'au moins une ouverture (12) de celui-ci.

6. Distributeur de gaz (1) selon l'une quelconque des revendications précédentes, le boîtier collecteur de gaz (8) étant étanche au gaz à l'exception de sa portion inférieure (9).

7. Distributeur de gaz (1) selon l'une quelconque des revendications précédentes, le capteur de gaz (10) étant disposé dans une portion supérieure de la partie supérieure (5) à l'intérieur du boîtier collecteur de gaz (8).

8. Distributeur de gaz (1) selon l'une quelconque des revendications précédentes, la partie supérieure (2) présentant une zone perforée (16) dans sa portion inférieure (9), à travers laquelle le gaz provenant de l'environnement ou le gaz s'échappant du distributeur de gaz (1) peut entrer dans le boîtier collecteur de gaz (8).

9. Distributeur de gaz (1) selon l'une quelconque des revendications précédentes, comprenant en outre une unité de commande raccordée au capteur de gaz (10) et conçue pour désactiver le distributeur de gaz (1) lors de la détection de gaz.

10. Distributeur de gaz (1) selon l'une quelconque des revendications précédentes, l'au moins une partie intermédiaire (17) comprenant une colonne (6, 7) s'étendant entre la partie inférieure (2) et la partie supérieure (5).

11. Distributeur de gaz (1) selon l'une quelconque des revendications précédentes, l'au moins une partie intermédiaire (17) comprenant une première et une seconde colonne (6, 7) s'étendant entre la partie inférieure (2) et la partie supérieure (5) sur des côtés opposés du distributeur de gaz (1).

12. Distributeur de gaz (1) selon la revendication 3, l'au moins une ouverture (12) de la partie supérieure (5) étant disposée dans une portion inférieure (9) de celle-ci.

13. Distributeur de gaz (1) selon la revendication 4, l'au moins une ouverture (11) de la partie inférieure (3) étant disposée dans une portion supérieure (20) de celle-ci.

14. Distributeur de gaz (1) selon l'une quelconque des revendications 10 à 13, comprenant en outre au moins une conduite d'alimentation traversant la portion creuse (14) de la partie intermédiaire (17) de l'unité de distribution (3) à la partie supérieure (5), et un raccord fourni au niveau de la partie supérieure (5), le raccord étant raccordé à la conduite d'alimentation et relié à la buse (4) par l'intermédiaire d'un tuyau flexible.

15. Distributeur de gaz (1) selon l'une quelconque des revendications précédentes, le gaz étant de l'hydrogène et le capteur de gaz (10) étant un capteur d'hydrogène.

16. Procédé de commande d'un distributeur de gaz (1) pour distribuer du gaz combustible à un véhicule, le distributeur de gaz (1) comprenant :
une partie inférieure (2) conçue pour être posée au sol et comportant une unité de distribution (3) reliée à un réservoir de gaz et à au moins une buse (4) destinée à alimenter le véhicule en gaz,
une partie supérieure (5) disposée au-dessus de la partie inférieure (2), la partie supérieure (5) comprenant un boîtier collecteur de gaz (8) présentant au moins une ouverture (12) par laquelle du gaz combustible à l'état gazeux peut entrer,
au moins une partie intermédiaire (17) reliant la partie inférieure (2) et la partie supérieure (5),
un capteur de gaz (10) disposé au niveau du boîtier collecteur de gaz (8), et
une unité de commande reliée au capteur de gaz (10),
le procédé comprenant l'étape consistant à désactiver le distributeur de gaz (1) en cas de détection de gaz dans le boîtier collecteur de gaz (8) au moyen du capteur de gaz (10).
